# EUROPEAN PATENT SPECIFICATION

(11) **EP 3 078 814 B1**
(45) Date of publication and mention of the grant of the patent: **23.10.2019**
(21) Application number: 14868301.4
(22) Date of filing: 11.08.2014
(51) Int. Cl.: F01D 11/08, F01D 9/04, F01D 25/00

(54) **TURBINE**
TURBINE
TURBINE

(30) Priority: 05.12.2013 JP 2013251841
(43) Date of publication of application: 12.10.2016
(73) Proprietor: IHI Corporation, Tokyo 135-8710 (JP)
(72) Inventor: YAMAZAKI, Hiroki, Tokyo 135-8710 (JP); TERASAWA, Masahiro, Tokyo 135-8710 (JP); II, Yasuhiro, Tokyo 135-8710 (JP)
(74) Representative: MERH-IP Matias Erny Reichl Hoffmann Patentanwälte PartG mbB
(86) International application number: PCT/JP2014/071192
(87) International publication number: WO 2015/083400

(56) References cited:
- EP-A1- 1 840 339
- EP-A1- 2 504 529
- JP-A- H02 104 903
- JP-A- 2005 030 313
- JP-A- 2005 030 315
- JP-A- 2006 090 313
- JP-A- 2011 521 144
- JP-A- 2013 512 382
- US-A1- 2005 004 810

## Description

### Technical Field

The present invention relates to a turbine constituting a jet engine for an aircraft, for example.

### Background Art

A turbine constituting a jet engine as described above includes a turbine case, and turbine disks and turbine nozzles alternately arranged by a plurality of stages in the turbine case. On each of peripheral portions of the plurality of stages of turbine disks, a plurality of turbine blades rotatable about the axis of the turbine case are placed, and on the inner peripheral surface of the turbine case, shrouds for suppressing a temperature rise thereof are placed annularly so as to surround the turbine blades.

The shroud adopts a segmented structure. Each shroud segment is attached to the turbine case by allowing an arcuate projection, placed on the front side of the jet engine, to engage with a receiving groove formed in the turbine case in the axial direction of the jet engine, and allowing an inward projection formed on the turbine case to engage with an outward groove, placed along the circumferential direction on the rear side of the jet engine, in the radial direction of the jet engine (see Patent Document 1, for example).

The turbine described above is subjected to periodic inspections in a predetermined cycle. When disassembling the turbine, the shroud is removed from the turbine case such that the rear side of the shroud segment is moved gradually in a direction where the outward groove of the shroud segment separates from the inward projection of the turbine case (centripetal direction) with use of hand tools such as a plastic hammer and a wrench to thereby be torn off from the turbine case.

An insulation of a circumferential edge of an outer casing of a turbine engine from a corresponding ring sector is known, wherein a turbine stage of said turbine engine includes a rotor wheel mounted inside a sectorised ring supported by an outer casing, the outer casing comprising at least one circumferential edge housed in said cavity for attaching the downstream end of the ring sector, the bottom wall of the annular cavity of the ring sector is radially separated from the circumferential edge of the outer casing, such as to leave a thermally insulating space between the two and comprises a means for radial positioning on said circumferential edge (see Patent Document 2, for example).

A turbine shroud segment that is provided with a back plate formed in an arc shape is known, wherein a front end of the back plate being supported by the groove so as to allow displacement in an axial direction of the gas turbine engine, a slot circumferentially formed on an outer surface of the back plate, the slot being engaged with the hook so as to be immovable in the axial direction and a touching member integrally formed on an inner surface of the back plate for touching with a rotating turbine blade (see Patent Document 3, for example).

### Related Art Document

### Patent Document

Patent Document 1: Japanese Patent No. 4474989
Patent Document 2: European Patent Application EP 2 504 529
Patent Document 3: US Patent Application US 2005/004810 A1

### Summary of the Invention

### Problems to be solved by the Invention

In the conventional turbine, however, as the shroud segment is moved gradually in the centripetal direction so as to separate the outward groove of the shroud segment from the inward projection of the turbine case with use of hand tools such as a plastic hammer and a wrench at the time of disassembly for periodic inspections as described above, a slightly large clearance is needed between the inward projection of the turbine case and the outward groove of the shroud segment, in consideration of the disassembling workability.

As such, there is a problem that engine performance loss is caused by the hot gas leaked from the combustor to the turbine case side through the clearance set to have a slightly large size, and that the turbine case is exposed to a high temperature. Thus, solving this problem has been a challenge conventionally.

The present invention has been made focusing on the conventional problem described above. An object of the present invention is to provide a turbine which enables disassembling work at the time of periodic inspections and the like to be performed easily, while realizing reduction of engine performance loss and mitigation of thermal fatigue of the turbine case.

### Means for Solving the Problems

In order to achieve the above object, an aspect of the present invention is directed to a turbine of a jet engine, including: a turbine case of a cylindrical shape; turbine blades rotatable about an axis of the turbine case; a turbine nozzle including a plurality of turbine nozzle segments; and a shroud including a plurality of shroud segments annularly placed along an inner peripheral surface of the turbine case while surrounding the turbine blades. Each of the turbine nozzle segments of the turbine nozzle is provided with an outer band which includes a front rim extending in a centrifugal direction thereof to a front side of the jet engine, and a rear rim extending in the centrifugal direction thereof; the outer band is adapted to be fixed between the turbine case and the shroud segment by allowing a tip end portion of the front rim to engage with a receiving groove formed in the turbine case, and allowing a band engaging portion formed on an end portion of the shroud segment on the front side of the jet engine to engage with a tip end portion of the rear rim from the rear side of the jet engine. Further, each of the shroud segments of the shroud is provided with a first engaging portion and a second engaging portion, the shroud segment of the shroud is fixed to the turbine case by allowing the first engaging portion to engage with the turbine case in the axial direction of the turbine case, and allowing the second engaging portion to engage with the turbine case in the radial direction of the turbine case, and the shroud segment of the shroud is provided with a back plate extending in a centripetal direction from the second engaging portion to a rear side of the jet engine and a tip portion of the back plate is provided with a pressure receiving portion, and the pressure receiving portion is configured to be able to receive a force in the centripetal direction.

In the turbine according to the present invention, when the shroud is removed from the turbine case, for example, for disassembly at the time of periodic inspections, the engaged state of the second engaging portion of the shroud segment with the turbine case in the radial direction is released by applying a force to the pressure receiving portion of the shroud segment in the centripetal direction with use of a tool or the like.

This means that as the shroud segment is provided with a pressure receiving portion, it is easy to apply a force to the shroud segment. As such, it is possible to remove the shroud segment from the turbine case easily, without moving the shroud segment gradually as in the conventional case.

As the shroud segment can be removed from the turbine case without moving it gradually as described above, it is not needed to set a large clearance between the turbine case and the second engaging portion of the shroud segment.

Thus, the amount of hot gas leaked to the turbine case side through the clearance can be reduced by the amount corresponding to the size reduction in the clearance between the turbine case and the second engaging portion of the shroud segment. This brings reduction of engine performance loss, and further, mitigation of thermal fatigue of the turbine case.

Further, as the turbine case is less likely to be exposed to a high temperature as described above, in the case of adopting an active clearance control system (ACC system) in which the turbine case is cooled so as to have a proper size, it is possible to reduce the cooling air for cooling the turbine case.

### Advantageous Effects of the Invention

The turbine according to the present invention exhibits an extremely excellent effect that it is possible to easily perform disassembling work at the time of periodic inspections and the like, while realizing reduction of engine performance loss and mitigation of thermal fatigue of the turbine case.

### Brief Description of the Drawings

FIG. 1 is a partial cross-sectional explanatory diagram of a low-pressure turbine according to an embodiment of the present invention.
FIG. 2 is an enlarged cross-sectional explanatory diagram showing a portion surrounded by an ellipse in FIG. 1 by enlarging it.
FIG. 3 is a partial perspective explanatory diagram showing a segment of a shroud in the low-pressure turbine of FIG. 1.
FIG. 4 is an operation explanatory diagram showing a procedure of removing the shroud in the low-pressure turbine shown in Fig. 1 from a turbine case, in a portion surrounded by an ellipse in FIG. 1.

### Mode for Carrying out the Invention

Hereinafter, the present invention will be described based on the drawings.

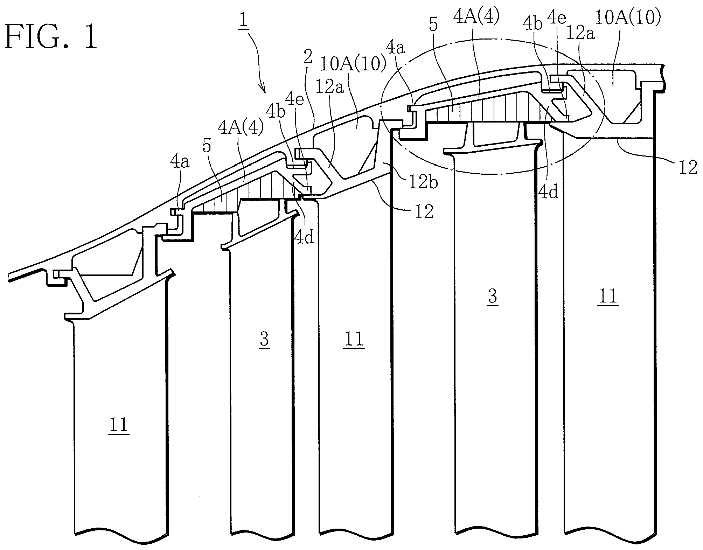

FIGS. 1 to 4 illustrate an embodiment of a turbine according to the present invention. In this embodiment, description will be given by using a low-pressure turbine constituting a jet engine as an example.

As shown in FIG. 1, a low-pressure turbine 1 constituting a jet engine includes a cylindrical turbine case 2. In the turbine case 2, a plurality of stages of turbine disks (not shown), rotatable about the axis of the jet engine, are placed with proper intervals in the axial direction (right and left direction in the figure) of the jet engine. Each of peripheral portions of the turbine disks are provided with a plurality of turbine blades 3.

The plurality of stages of the turbine disks are coupled with each other so as to rotate integrally. The turbine disks are integrally connected to a compressor rotor of a low-pressure compressor and a fan rotor of a fan, not shown, placed in a front portion of the jet engine.

Further, in the turbine case 2, a plurality of stages (only two stages are shown in FIG. 1) of shrouds 4 for suppressing a temperature rise of the turbine case 2 are placed so as to surround the corresponding turbine blades 3. Inside each of the shrouds 4, a honeycomb member 5 is placed in a state where it is allowed to be in contact with a tip portion of the corresponding turbine blades 3.

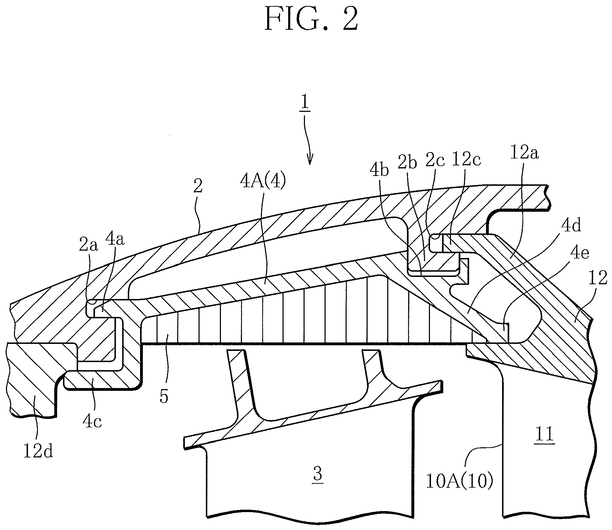

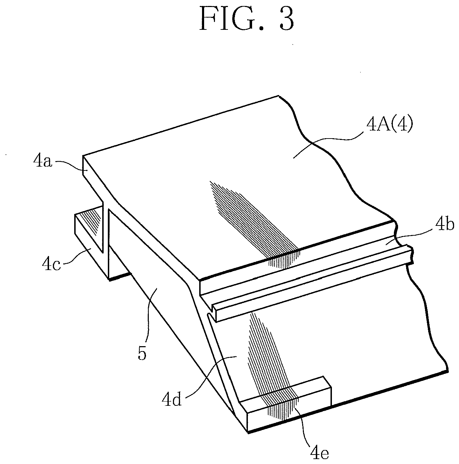

The shroud 4 adopts a segmented structure. As shown also in FIGS. 2 and 3, an arcuate shroud segment 4A includes an arcuate projection (first engaging portion) 4a formed at an end portion on the front side (left side in FIGS. 1 and 2, upper left side in FIG. 3) of the jet engine, and an outward groove (second engaging portion) 4b formed along the circumferential direction at an end portion on the rear side (right side in FIGS. 1 and 2, upper right side in FIG. 3) of the jet engine.

The shroud segment 4A is attached to the turbine case 2 by allowing the arcuate projection 4a to engage with a receiving groove 2a formed in the turbine case 2 in the axial direction of the jet engine, and allowing an inward projection 2b formed on the turbine case 2 to engage with the outward groove 4b in the radial direction (up and down direction in the figure) of the jet engine. The shroud segment 4A can be removed from the turbine case 2 by separating the outward groove 4b and the inward projection 2b of the turbine case 2 from each other in the radial direction of the jet engine.

Further, in the turbine case 2, a plurality of stages (three stages are shown in FIG. 1) of turbine nozzles 10 are arranged alternately with the plurality of stages of turbine disks, with proper intervals in the axial direction of the jet engine. The low-pressure turbine 1 is adapted such that a plurality of stages of low-pressure compressor rotors and fan rotors are rotated integrally by a drive force obtained by rotating the plurality of stages of turbine disks with expansion of hot gas from a combustor not shown.

The turbine nozzle 10 also adopts a segmented structure. A turbine nozzle segment 10A includes a plurality of stator vanes 11, an arcuate outer band 12 connecting the respective tip ends of the plurality of stator vanes 11 with each other, and an inner band, not shown, connecting the respective base ends of the plurality of stator vanes 11 with each other.

The outer band 12 of the turbine nozzle segment 10A includes a front rim 12a extending in the centrifugal direction thereof to the front side of the jet engine, and a rear rim 12b extending in the centrifugal direction thereof. The outer band 12 is adapted to be fixed between the turbine case 2 and the shroud segment 4A by allowing a tip end portion 12c of the front rim 12a to engage with the receiving groove 2c formed in the turbine case 2, and allowing a band engaging portion 4c formed on an end portion of the shroud segment 4A on the front side of the jet engine to engage with a tip end portion 12d of the rear rim 12b from the rear side of the jet engine.

In this case, the shroud segment 4A is provided with a back plate 4d extending in the centripetal direction from the outward groove 4b to the rear side of the jet engine. A tip end portion of the back plate 4d is provided with a pressure receiving portion 4e.

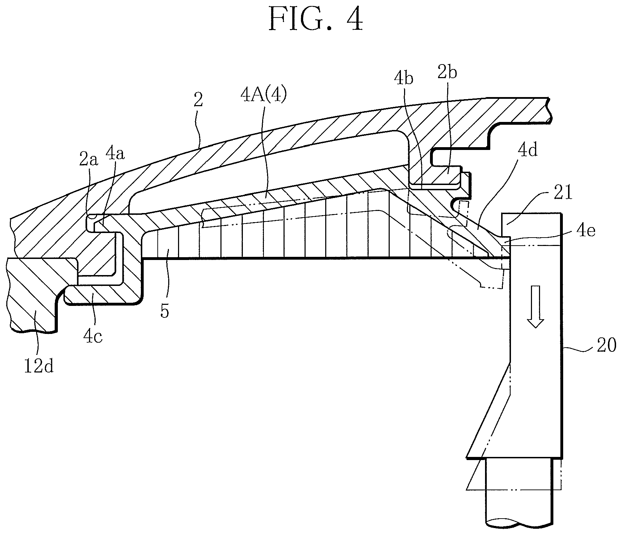

The pressure receiving portion 4e is a portion that receives a force to release the engaged state of the outward groove 4b with the inward projection 2b of the turbine case 2 in a step of removing the shroud segment 4A from the turbine case 2. In this embodiment, the pressure receiving portion 4e is formed in a stepped shape on a side edge portion (end portion in the circumferential direction) of the shroud segment 4A, and as shown in FIG. 4, a hook portion 21 of a slide hammer 20 can be hooked thereto. It should be noted that a tool for applying a force to release the engaged state of the outward groove 4b to the pressure receiving portion 4e of the shroud segment 4A is not limited to the slide hammer 20.

In the low-pressure turbine 1 according to the present embodiment, in the case of disassembly at the time of periodic inspections, for example, the turbine nozzles 10 and the turbine disks (turbine blades 3) are removed alternately from the rear side of the jet engine.

In the disassembling work, when removing the shroud segment 4A surrounding the turbine blades 3 from the turbine case 2, as shown in FIG. 4, the hook portion 21 of the slide hammer 20 is hooked to the pressure receiving portion 4e of the shroud segment 4A, and a weight, not shown, of the slide hammer 20 is operated so as to apply a force in the centripetal direction, shown by a white arrow, to the pressure receiving portion 4e of the shroud segment 4A. Thereby, as shown by a virtual line in FIG. 4, the engaged state in the radial direction of the outward groove 4b of the shroud segment 4A with the inward projection 2b of the turbine case 2 is released, such that the shroud segment 4A can be removed from the turbine case 2.

This means that as the shroud segment 4A is provided with the pressure receiving portion 4e, it becomes easy to apply a force to the shroud segment 4A using the slide hammer 20. Thereby, the shroud segment 4A can be removed easily from the turbine case 2, without moving it gradually as it has been.

As such, as it is possible to remove the shroud segment 4A from the turbine case 2 without moving it gradually as described above, it is not needed to set a large clearance between the inward projection 2b of the turbine case 2 and the outward groove 4b of the shroud segment 4A.

Accordingly, it is possible to reduce the amount of hot gas leaked to the turbine case 2 side through the clearance by the amount corresponding to the size reduction in the clearance between the inward projection 2b of the turbine case 2 and the outward groove 4b of the shroud segment 4A. Consequently, engine performance loss is reduced, and further, thermal fatigue of the turbine case 2 is mitigated.

Further, in the low-pressure turbine 1 according to the present embodiment, as the pressure receiving portion 4e is formed at the tip end portion of the back plate 4d extending in the centripetal direction from the outward groove 4b of the shroud segment 4A to the rear side of the jet engine, the moment is increased by the length of the back plate 4d, whereby the shroud segment 4A can be removed from the turbine case 2 with a smaller force.

Further, as the turbine case 2 is less likely to be exposed to a high temperature as described above, if the low-pressure turbine 1 adopts an active clearance control system, cooling air for cooling the turbine case 2 can be reduced.

An aspect of the present invention is a turbine of a jet engine, including: a turbine case of a cylindrical shape; turbine blades rotatable about an axis of the turbine case; a turbine nozzle including a plurality of turbine nozzle segments; and a shroud including a plurality of shroud segments annularly placed along an inner peripheral surface of the turbine case while surrounding the turbine blades. Each of the turbine nozzle segments of the turbine nozzle is provided with an outer band which includes a front rim extending in a centrifugal direction thereof to a front side of the jet engine, and a rear rim extending in the centrifugal direction thereof; the outer band is adapted to be fixed between the turbine case and the shroud segment by allowing a tip end portion of the front rim to engage with a receiving groove formed in the turbine case, and allowing a band engaging portion formed on an end portion of the shroud segment on the front side of the jet engine to engage with a tip end portion of the rear rim from the rear side of the jet engine. Further, each of the shroud segments of the shroud is provided with a first engaging portion and a second engaging portion, the shroud segment of the shroud is fixed to the turbine case by allowing the first engaging portion to engage with the turbine case in an axial direction of the turbine case, and allowing the second engaging portion to engage with the turbine case in a radial direction of the turbine case, and the shroud segment of the shroud is provided with a back plate extending in a centripetal direction from the second engaging portion to a rear side of the jet engine and a tip portion of the back plate is provided with a pressure receiving portion, and the pressure receiving portion is configured to be able to receive a force in the centripetal direction.

In the turbine according to the present invention, as the shroud segment is provided with a pressure receiving portion, it is easy to apply a force to the shroud segment in a centripetal direction, whereby the shroud segment can be removed from the turbine case easily for disassembly at the time of periodic inspections, for example.

As it is possible to remove the shroud segment from the turbine case without moving it gradually as described above, the amount of the hot gas leaked to the turbine case side through the clearance can be reduced by the amount corresponding to the size reduction in the clearance between the turbine case and the second engaging portion of the shroud segment. This brings reduction of engine performance loss, and further, mitigation of thermal fatigue of the turbine case.

The structure of the turbine according to the present invention is not limited to the embodiment described above.

### Explanation of Reference Signs

- 1: low-pressure turbine (turbine)
- 2: turbine case
- 3: turbine blade
- 4: shroud
- 4A: shroud segment
- 4a: projection (first engaging portion)
- 4b: outward groove (second engaging portion)
- 4e: pressure receiving portion

## Claims

1. A turbine (1) of a jet engine, the turbine comprising:
a turbine case (2) of a cylindrical shape;
turbine blades (3) rotatable about an axis of the turbine case (2);
a turbine nozzle (10) including a plurality of turbine nozzle segments (10A); and
a shroud (4) including a plurality of shroud segments (4A) annularly placed along an inner peripheral surface of the turbine case (2) while surrounding the turbine blades (3), wherein
each of the turbine nozzle segments (10A) of the turbine nozzle (10) is provided with an outer band (12) which includes a front rim (12a) extending in a centrifugal direction thereof to a front side of the jet engine, and a rear rim (12b) extending in the centrifugal direction thereof;
the outer band (12) is adapted to be fixed between the turbine case (2) and the shroud segment (4A) by allowing a tip end portion (12c) of the front rim (12a) to engage with a receiving groove (2c) formed in the turbine case (2), and allowing a band engaging portion (4c) formed on an end portion of the shroud segment (4A) on the front side of the jet engine to engage with a tip end portion (12d) of the rear rim (12b) from the rear side of the jet engine;
each of the shroud segments (4A) of the shroud is provided with a first engaging portion (4a) and a second engaging portion (4b), and
the shroud segment (4A) of the shroud (4) is fixed to the turbine case (2) by allowing the first engaging portion (4a) to engage with the turbine case (2) in an axial direction of the turbine case (2), and allowing the second engaging portion (4b) to engage with the turbine case (2) in a radial direction of the turbine case (2),
**characterized in that**
the shroud segment (4A) of the shroud (4) is provided with a back plate (4d) extending in a centripetal direction from the second engaging portion (4b) to a rear side of the jet engine and a tip portion of the back plate (4d) is provided with a pressure receiving portion (4e), and
the pressure receiving portion (4e) is configured to be able to receive a force in the centripetal direction.

## Patentansprüche

1. Turbine (1) eines Triebwerks, wobei die Turbine umfasst:
ein Turbinengehäuse (2) von einer zylindrischen Form;
Turbinenschaufeln (3), die um eine Achse des Turbinengehäuses (2) drehbar sind;
eine Turbinendüse (10) einschließlich mehrerer Turbinendüsensegmente (10A) und
ein Deckband (4), das mehrere Deckbandsegmente (4A) umfasst, die entlang einer inneren Umfangsfläche des Turbinengehäuses (2) ringförmig angeordnet sind, während sie die Turbinenschaufeln (3) umgeben, wobei
jedes der Turbinendüsensegmente (10A) der Turbinendüse (10) mit einem äußeren Band (12) versehen ist, das einen vorderen Rand (12a) umfasst, der sich in einer zentrifugalen Richtung davon zu einer Vorderseite des Triebwerks erstreckt, und einen hinteren Rand (12b), der sich in der zentrifugalen Richtung davon erstreckt;
das äußere Band (12) derart angepasst ist, dass es zwischen dem Turbinengehäuse (2) und dem Deckbandsegment (4A) befestigt ist, indem es einem Spitzenendenabschnitt (12c) des vorderen Rands (12a) ermöglicht, in eine Aufnahmenut (2c) einzugreifen, die in dem Turbinengehäuse (2) gebildet ist, und einem Bandeingreifabschnitt (4c) ermöglicht, der an einem Endabschnitt des Deckbandssegments (4A) an der Vorderseite des Triebwerks gebildet ist, in einen Spitzenendenabschnitt (12d) des hinteren Rands (12b) von der Rückseite des Triebwerks einzugreifen;
jedes der Deckbandssegmente (4A) des Deckbands mit einem ersten Eingreifabschnitt (4a) und einem zweiten Eingreifabschnitt (4b) versehen ist und
das Deckbandssegment (4A) des Deckbands (4) an dem Turbinengehäuse (2) befestigt ist, indem es dem ersten Eingreifabschnitt (4a) ermöglicht, in das Turbinengehäuse (2) in einer Axialrichtung des Turbinengehäuses (2) einzugreifen, und dem zweiten Eingreifabschnitt (4b) erlaubt in das Turbinengehäuse (2) in einer Radialrichtung des Turbinengehäuses (2) einzugreifen,
**dadurch gekennzeichnet, dass**
das Deckbandssegment (4A) des Deckbands (4) mit einer Rückplatte (4d) versehen ist, die sich in einer zentripetalen Richtung von dem zweiten Eingreifabschnitt (4b) zu einer Rückseite des Triebwerks erstreckt, und ein Spitzenabschnitt der Rückplatte (4d) mit einem Druckaufnahmeabschnitt (4e) versehen ist und
der Druckaufnahmeabschnitt (4e) derart konfiguriert ist, dass er eine Kraft in der zentripetalen Richtung aufnehmen kann.

## Revendications

1. Turbine (1) d'un moteur à réaction, la turbine comprenant :
un carter de turbine (2) de forme cylindrique ;
des pales de turbine (3) pouvant tourner sur un axe du carter de turbine (2) ;
une tuyère de turbine (10) incluant une pluralité de segments de tuyère de turbine (10A) ; et
un carénage (4) incluant une pluralité de segments de carénage (4A) placés de façon annulaire le long d'une surface périphérique intérieure du carter de turbine (2) tout en entourant les pales de turbine (3), dans laquelle
chacun des segments de tuyère de turbine (10A) de la tuyère de turbine (10) est doté d'une bande extérieure (12) qui inclut un bord avant (12a) s'étendant dans une direction centrifuge de celle-ci vers un côté avant du moteur à réaction, et un bord arrière (12b) s'étendant dans la direction centrifuge de celle-ci ;
la bande extérieure (12) est adaptée pour être fixée entre le carter de turbine (2) et le segment de carénage (4A) en permettant à une partie d'extrémité de pointe (12c) du bord avant (12a) de s'engager avec une rainure réceptrice (2c) formée dans le carter de turbine (2), et en permettant à une partie d'engagement de bande (4c) formée sur une partie d'extrémité du segment de carénage (4A) sur le côté avant du moteur à réaction de s'engager avec une partie d'extrémité de pointe (12d) du bord arrière (12b) depuis le côté arrière du moteur à réaction ;
chacun des segments de carénage (4A) du carénage est doté d'une première partie d'engagement (4a) et d'une seconde partie d'engagement (4b), et
le segment de carénage (4A) du carénage (4) est fixé au carter de turbine (2) en permettant à la première partie d'engagement (4a) de s'engager avec le carter de turbine (2) dans une direction axiale du carter de turbine (2), et en permettant à la seconde partie d'engagement (4b) de s'engager avec le carter de turbine (2) dans une direction radiale du carter de turbine (2),
**caractérisée en ce que**
le segment de carénage (4A) du carénage (4) est doté d'une plaque arrière (4d) s'étendant dans une direction centripète à partir de la seconde partie d'engagement (4b) vers un côté arrière du moteur à réaction et une partie de pointe de la plaque arrière (4d) est dotée d'une partie réceptrice de pression (4e), et
la partie réceptrice de pression (4e) est configurée pour être en mesure de recevoir une force dans la direction centripète.
